# EUROPEAN PATENT SPECIFICATION

(11) **EP 1 175 368 B1**
(45) Date of publication and mention of the grant of the patent: **03.11.2004**
(21) Application number: 00915674.6
(22) Date of filing: 08.03.2000
(51) Int. Cl.: B66C 3/00, B66C 13/06

(54) **ARRANGEMENT AND METHOD RELATING TO A SWING DAMPER**
ANORDNUNG UND VERFAHREN BETREFFEND EINEM SCHWINGUNGSDÄMPFER
DISPOSITIF ET PROCEDE RELATIFS A UN AMORTISSEUR D'OSCILLATIONS

(30) Priority: 09.03.1999 SE 9900836
(43) Date of publication of application: 30.01.2002
(73) Proprietor: INDEXATOR AB, S-922 21 Vindeln (SE)
(72) Inventor: HARR, Joakim, S-903 43 Ume (SE); JONSSON, Anders, S-922 31 Vindeln (SE); JONSSON, Christer, S-922 93 Vindeln (SE)
(74) Representative: Körber, Wolfhart, Dr.
(86) International application number: PCT/SE2000/000466
(87) International publication number: WO 2000/053522

(56) References cited:
- US-A- 3 895 694
- US-A- 3 937 302
- US-A- 4 417 759

## Description

The present invention relates to a swing damper arrangement of the kind defined in the preamble of Claim 1. The invention also relates to a method.

Such a swing damper is known from US-A-3,937,302.

In connection with the use of swing dampers to support different type of tools, for instance tools that hang from a crane jib or arm, it is desired to be able to dampen or brake the pendulum movement/oscillating movement that normally occurs when maneuvering the crane jib and performing various tasks in both an effective and reliable manner.

Swing dampers can be used in connection with all conceivable types of tool that, e.g., hang from the tip of a crane jib, for instance tools used in such machines as forest harvesters, scooters, forest processors, lumber cranes, excavators and diggers, special duty machines, etc. The swing damper may have a single or a double function, in other words it may function to dampen/brake a swinging mass in one or two pendulating planes/oscillating planes.

One object of the present invention is to provide a swing damper that includes a highly advantageous brake arrangement, and also to provide a braking process. These objects are achieved with an arrangement and a method that have the characteristic features set forth in the claims.

The invention affords many advantages, of which the following can be mentioned by way of example.
A swing damper that includes an inventive arrangement is very compact.

A smooth braking action is obtained, together with uniform wear on the brake components.

Floating suspension of the brake unit affords a large number of advantages.

The useful life of the brake components is significantly extended and the occasions when adjustments may be needed are widely spaced.

Brake components can be replaced without needing to remove the tool from the jib tip.

The brake can be readily set initially to a desired braking force, and any subsequent adjustment to the brake arrangement that may be required can also be effected very simply.

The brake disc is not subjected to stress or strain as a result of play in the bearing or bearings for instance, and the brake components and associated fastener devices float together with all lateral motion of the brake disc.

Inventive arrangements can be used in both single and double swing dampers, and the inventive arrangement can also be readily adapted to two or more brake discs that are disposed parallel with one another.

The inventive arrangement has both technical and economical advantages.

The invention will now be described in more detail with reference to exemplifying embodiments thereof and also with reference to the accompanying drawings, in which
Figure 1 is a perspective view of an inventive arrangement mounted at the tip of a crane jib and carrying a gripping tool;
Figure 2 is a partially cut-away perspective view of a swing damper that includes an inventive arrangement;
Figure 3 is a perspective view of a brake disc and associated brake unit;
Figure 4 is a vertical section view of the arrangement; and
Figure 5 illustrates an embodiment that includes twin brake discs.

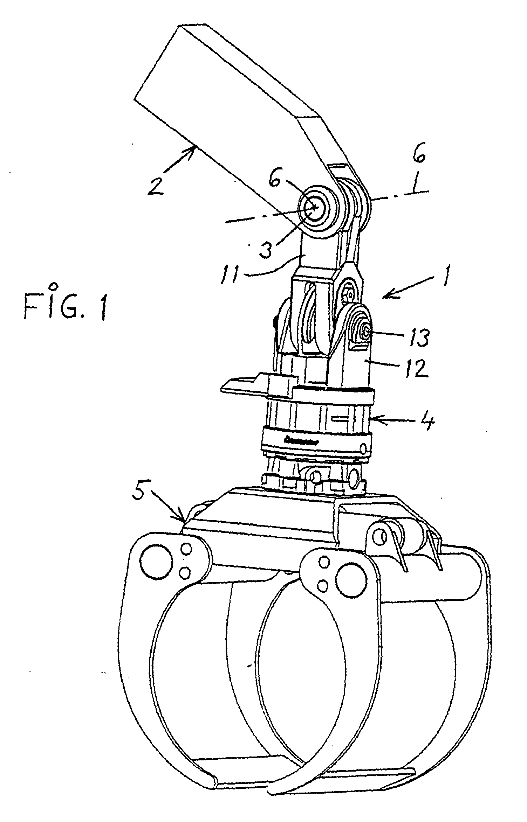

Figure 1 illustrates an inventive swing damper 1 which is pivotally mounted on the tip of a crane jib or arm 2 by means of a slew joint/bearing 3. The swing damper 1 carries at its lower end a rotator 4 which, in turn, carries a working tool, in the illustrated case a gripper 5.

The bearing 3 permits free pendulum movement/oscillatory movement about an axis 6, and the rotator 4 enables the gripping tool 5 to be rotated, the rotator 4 of the illustrated embodiment being hydraulically operated. Hydraulic hoses to the rotator and the gripping tool have not been shown for reasons of clarity.

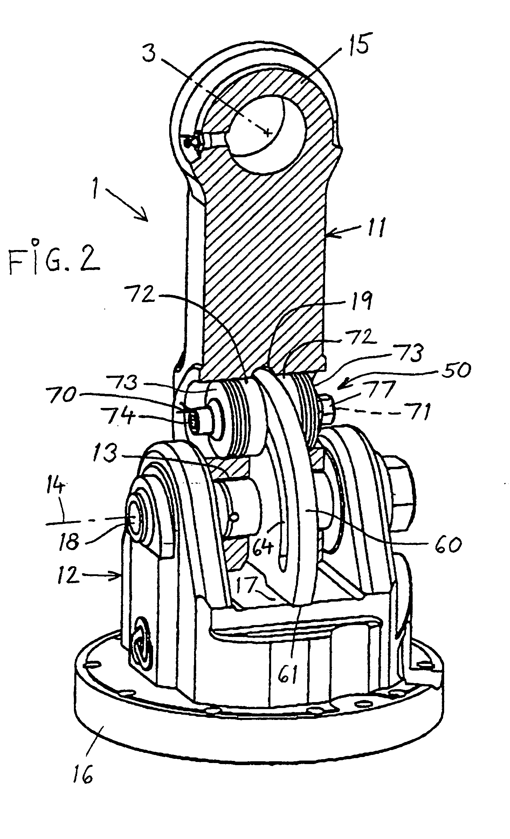

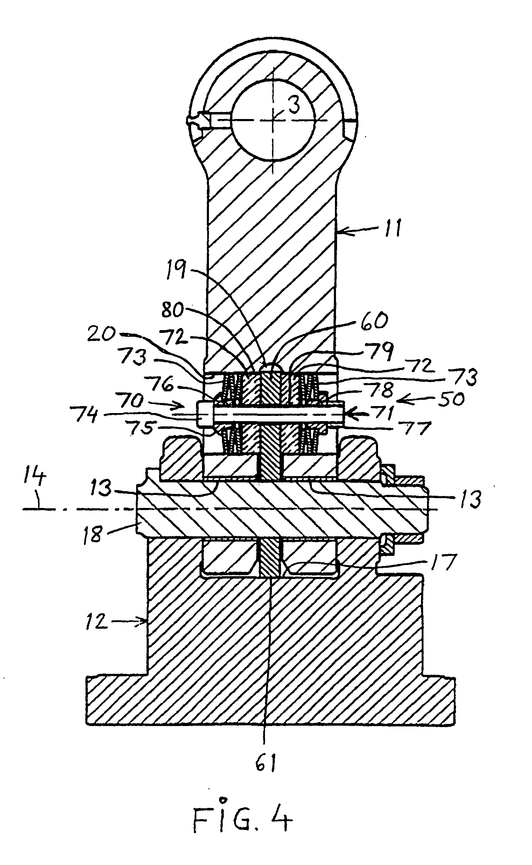

As will be best seen from Figure 2 and 4, the swing damper 1 includes an upper part 11 which is connected to the jib 2 by means of the bearing 3 for free pivotal movement. The swing damper 1 further includes a bottom part 12 which carries the tool 5, for instance via the rotator 4. The upper part 11 has an attachment lug 15 which co-acts with the bearing 3. The bottom part 12 of the illustrated embodiment carries an attachment means 16 for the rotator 4. Alternatively, the tool 5 may be connected directly to the attachment 16.

The top 11 and the bottom 12 of the swing damper are pivotally interconnected via a slew joint/bearing 13, so as to pivot or swing about an axis 14. The pivot axis 14 is essentially perpendicular to the pivot axis 6. This ensures that the tool 5 will have the desired mobility.

In order to achieve relatively rapid damping of the pendulum movement/oscillatory movement that occurs when maneuvering the tool 5 suspended from the crane jib, the swing damper 1 is provided with a brake arrangement 50 which functions to brake/retard pendular movement/oscillatory movement of the tool about the pivot axis 14.

The brake arrangement 50 includes a brake disc 60 and a brake unit 70. The bottom edge 61 of the brake disc 60 rests on an upper surface 17 of the bottom part 12 of the damper, and the brake disc 60 is arranged laterally slidable on the center pin 18 of the bearing 13, as will be apparent from Figures 2 and 4. The top part 11 has provided therein a recess 19 which accommodates the brake disc 60, said recess 19 having a width which will allow the brake disc 60 to move sideways to a limited extent, as will best be seen from Figure 4.

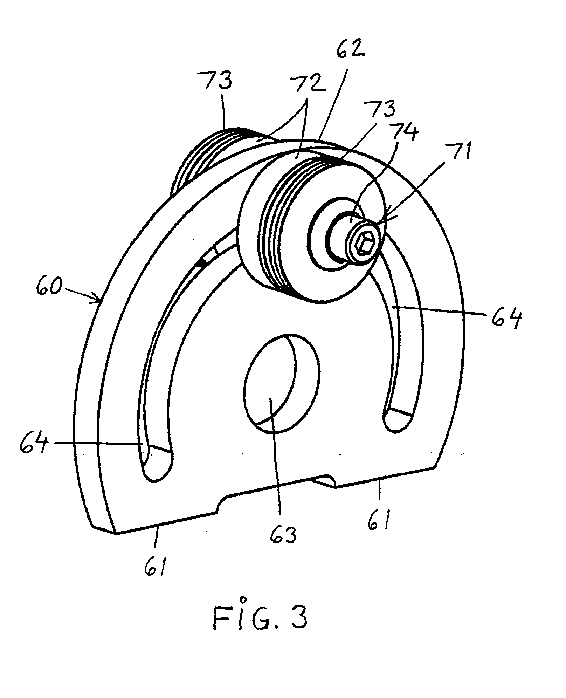

The design of the brake disc 60 will best be seen from Figure 3, which shows the disc to have a planar undersurface 61, a circular upper surface 62 and a central hole 63 through which the bearing pin 18 extends with a given clearance. The brake disc 60 also includes a circular or arcuate slot 64 through which a fastener element 71 on the brake unit 70 extends. The fastener element 71 has a certain degree of freedom in the slot 64, so that it is able to move along the slot 64.

In addition to the fastener element 71, the brake unit 70 also includes two brake components in the form of brake blocks 72, and spring devices in the form of so-called cup springs 73.

The fastener element 71 comprises a screw 74 that carries adjacent its head a washer 75 that has a guide collar 76. The screw 71 carries on its threaded end a nut 77 that has a guide collar 78. The nut 77 will suitably be locked against loosening.

The brake blocks 72 have a central hole 79 through which the screw 71 can move freely. The outer contours 80 of the brake blocks 72 are suitably adapted so that they will slide in a hole 20 through the upper part 11 of the swing damper while essentially being shape-guided. The brake components/brake blocks 72 may have a round or non-round outer shape.

In the illustrated case, the spring devices 73 are cup springs that are placed on respective sides of the brake blocks 72 and disposed in mirror image with each other, as will be apparent from Figure 4. When a greater spring force is desired, the cup springs 73 can be grouped in a manner different to that shown. The spring devices 73 are guided freely against the guide collars 76 and 78 and are dimensioned so as to have room in the hole 20 and therewith press the brake components 72 against the brake disc 60. The desired braking characteristic/braking force is conveniently set by tightening the nut 77. Any subsequent adjustment required can be achieved by either tightening or loosening the nut 77.

The inventive arrangement operates as follows:

It is assumed that the brake unit 70 has been adjusted to obtain desired braking properties. The tool 5 will swing when maneuvering the crane jib 2, wherewith swinging movement of the tool 5 will be dampened or braked by the brake components 72 being pressed into braking abutment with the brake disc 60, wherewith the fastener device 71 slides in the arcuate slot 64 in the brake disc 60 in conjunction with braking said movement.

It will be noted that the brake disc 60 is not subjected to strain emanating from bearing play for instance. The brake unit 70 floats laterally and adapts itself to the brake disc 60.

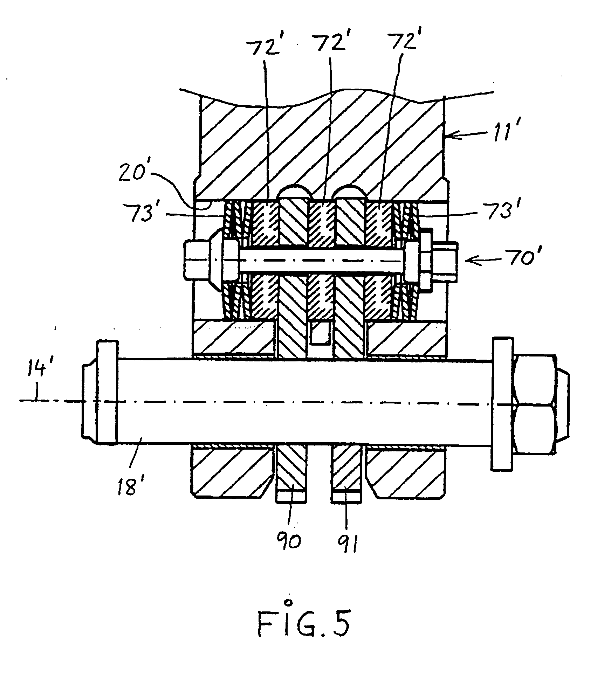

Figure 5 shows an alternative embodiment of the invention that includes two brake discs 90 and 91. The brake discs 90, 91 are designed according to the same principles as the aforedescribed brake disc 60. In the Figure 5 embodiment, the brake unit 70' includes three brake components 72'. In other respects, the construction of the brake unit 70' will be apparent from Figure 5 in which components that find correspondence in the earlier embodiment have been identified by the same reference numerals to which a prime has been added.

It will be understood that the described embodiments can be varied in many ways within the scope of the present invention. For instance, more than one brake unit can be included when necessary. The number of brake discs and brake components can, of course, be varied, as well as the construction of the spring devices 73. The spring devices 73 need not necessarily be divided into two groups in the illustrated manner, but may alternatively be placed at one end of the fastener element 71 if desired.

It will also be understood that the design and construction of the spring devices 73 can be varied widely, and that the spring device may be comprised of many different types of bodies or elements that exert a spring force.

The spring device 73 need not necessarily be a mechanical device, but may comprise a pressure-medium based spring means/pressure means. For instance, hydraulically powered spring means/pressure means may be used. Thus, there are many variations that can be appropriated within the scope of the invention with respect to the design and construction of the spring devices/pressure devices.

In the illustrated case, the brake disc 60 is carried by the lower part 12 and the brake unit 70 by the upper part 11 of the swing damper. It will be understood, however, that the inventive arrangement may be constructed so that the brake disc is carried by the upper part 11 and the brake unit carried by the lower part 12 of said damper.

The illustrated swing damper is a single-type damper, although it will be understood that inventive arrangements can be used in double-type swing dampers, in which pendular damping/swing damping can be achieved by means of inventive arrangements with respect to both the bearing 3 and the bearing 13.

It will also be understood that the described and illustrated components of the swing damper can be replaced with functionally equivalent components within the concept of the invention. Naturally, these optional variations also apply to the choice of material from which said components are made.

Thus, the invention is not restricted to the illustrated and described embodiments, since changes and modifications can be made within the scope of the accompanying claims.

## Claims

1. A swing damper arrangement particularly a swing damper (1) for carrying a tool (5) that hangs from a crane jib (2) or the like, wherein the swing damper (1) includes an upper part (11) which is connectable to the crane jib (2), and a lower part (12) which is able to carry a work tool (5) or some like device either directly or via a rotator (4) for instance, wherein the upper part (11) and the lower part (12) are pivotally connected to one another through the medium of a slewing joint (13), wherein the swing damper (1) includes a brake arrangement (50) that comprises at least one brake disc (60) and at least one brake unit (70) that coacts with said brake disc, wherein the brake disc (60) is carried either by the upper part (11) or the lower part (12) of said swing damper, wherein the brake unit (70) is carried by that part that does not carry the brake disc, wherein the brake disc (60) includes an arcuate slot (64) that accommodates a brake unit fastener device (71), **characterized in that** the brake unit (70) includes at least two brake components (72) having a hole (79) for the fastener device (71) and each of which is placed on a respective side of the brake disc (60); and **in that** the brake components (72) are pressed into braking abutment with the brake disc (60) by means of spring devices (73) or by means of a pressure medium, said spring devices or pressure medium being adapted to act between the fastener device (71) and the brake components (72).

2. A swing damper arrangement according to Claim 1, **characterized in that** the fastener device (71) includes a screw (74) and a nut (77).

3. A swing damper arrangement according to Claim 1 or 2, **characterized in that** the outer contour of the brake components (72) is adapted for sliding coaction with a recess (20) in the part (11) that lacks a brake disc.

4. A swing damper arrangement according to any one of Claims 1-3, **characterized in that** the spring device (73) comprises cup springs.

5. A swing damper arrangement according to any one of Claims 1-4, **characterized in that** the part (11) that does not carry a brake disc has a recess (19) which accommodates a part of the brake disc (60).

6. A method relating to a swing damper, particularly to a swing damper (1) which is intended to carry a tool (5) that hangs from a crane jib (2) or the like, wherein the swing damper (1) includes an upper part (11) that is connected to the crane jib (2), and a lower part (12) that carries a working tool (5) or the like either directly or via a rotator (4) for instance, wherein the upper part (11) and the lower part (12) are pivotally connected to each other via a slewing joint (13), wherein the swing damper (1) includes a brake arrangement (50) that comprises at least one brake disc (60) and at least one brake unit (70) that coacts with said brake disc, wherein the brake disc (60) is carried either by the upper part (11) or the lower part (12) of said swing damper, and wherein the brake unit (70) is carried by the part that does not carry the brake disc, **characterized by** generating a braking action so as to dampen swinging of said tool with the aid of two brake components (72) included in the brake unit (70), said brake components having a hole (79) for a brake unit fastener device (71) and being caused to be pressed into braking abutment with the brake disc (60) by means of spring devices or by means of a pressure medium adapted to act between the brake unit fastener device (71) and the brake components (72) when said fastener device (71) is sliding in an arcuate slot (64) in the brake disc (60) during pendulum movement/swinging movement.

7. A method according to Claim 6, **characterized by** causing a peripheral surface of the brake components (72) to coact slidingly with a recess (20) in the part (11) that does not carry the brake disc.

8. A method according to Claim 6 or 7, **characterized by** using mechanical spring devices (73).

9. A method according to Claim 6 or 7, **characterized by** using hydraulically powered spring means.

10. The use of an arrangement according to any one of Claims 1-5, **characterized in that** the arrangement is used to dampen pendular movement/swinging movement of a suspended object (5).

## Patentansprüche

1. Schwingungsdämpferanordnung, insbesondere ein Schwingungsdämpfer (1) zum Tragen eines Werkzeugs (5), welches von einem Kranausleger (2) oder dergleichen herabhängt, wobei der Schwingungsdämpfer (1) ein oberes Teil (11) aufweist, welches mit dem Kranausleger (2) verbunden werden kann, und ein unteres Teil (12), welches in der Lage ist, beispielsweise ein Arbeitswerkzeug (5) oder eine ähnliche Einrichtung entweder unmittelbar oder über einen Drehtisch (4) zu tragen, wobei das obere Teil (11) und das untere Teil (12) über das Medium eines Schwenkgelenks (13) drehbar miteinander verbunden sind, wobei der Schwingungsdämpfer (1) eine Bremsanordnung (50) aufweist, die zumindest eine Bremsscheibe (60) und zumindest eine Bremseinheit (70) aufweist, welche mit der Bremsscheibe zusammenwirkt, wobei die Bremsscheibe (60) entweder durch das obere Teil (11) oder das untere Teil (12) des Schwingungsdämpfers getragen wird, wobei die Bremseinheit (70) durch dasjenige Teil getragen wird, welches die Bremsscheibe nicht trägt, wobei die Bremsscheibe (60) einen bogenförmigen Schlitz (64) aufweist, der eine Bremseinheit-Befestigungseinrichtung (71) beherbergt,
**dadurch gekennzeichnet, dass**
die Bremseinheit (70) zumindest zwei Bremskomponenten (72) aufweist, die ein Loch (79) für die Befestigungseinrichtung (71) aufweisen und wobei jede von diesen auf einer entsprechenden Seite der Bremsscheibe (60) angeordnet ist; und dass die Bremskomponenten (72) in bremsendes Widerlager mit der Bremsscheibe (60) mittels Federeinrichtungen (73) oder mittels eines Druckmediums gepresst werden, wobei die Federeinrichtungen oder das Druckmedium angepasst ist, zwischen der Befestigungseinrichtung (71) und den Bremskomponenten (72) zu wirken.

2. Schwingungsdämpferanordnung nach Anspruch 1, **dadurch gekennzeichnet, dass** die Befestigungseinrichtung (71) eine Schraube (74) und eine Mutter (77) aufweist.

3. Schwingungsdämpferanordnung nach Anspruch 1 oder 2, **dadurch gekennzeichnet, dass** die äußere Kontur der Bremskomponenten (72) für eine Gleitzusammenarbeit mit einer Ausnehmung (20) in dem Teil (11), bei dem eine Bremsscheibe fehlt, angepasst ist

4. Schwingungsdämpferanordnung nach einem der Ansprüche 1 - 3, **dadurch gekennzeichnet, dass** die Federeinrichtung (73) Tellerfedem aufweist.

5. Schwingungsdämpferanordnung nach einem der Ansprüche 1 - 4, **dadurch gekennzeichnet, dass** das Teil (11), welches keine Bremsscheibe trägt, eine Ausnehmung (19) aufweist, welche ein Teil der Bremsscheibe (60) beherbergt.

6. Verfahren, welches sich auf einen Schwingungsdämpfer, insbesondere einen Schwingungsdämpfer (1) bezieht, bei dem beabsichtigt ist, ein Werkzeug (5) zu tragen, welches von einem Kranausleger (2) oder dgl. hängt, wobei der Schwingungsdämpfer (1) ein oberes Teil (11) aufweist, welches mit dem Kranausleger (2) verbunden ist, und ein unteres Teil (12), welcher beispielsweise ein Arbeitswerkzeug (5) oder dgl. entweder unmittelbar oder über einen Drehtisch (4) trägt, wobei das obere Teil (11) und das untere Teil (12) über ein Schwenkgelenk (13) drehbar miteinander verbunden sind, wobei der Schwingungsdämpfer (1) eine Bremsanordnung (50) aufweist, welche zumindest eine Bremsscheibe (60) und zumindest eine Bremseinheit (70) aufweist, die mit der Bremsscheibe zusammenwirkt, wobei die Bremsscheibe (60) entweder durch das obere Teil (11) oder das untere Teil (12) des Schwingungsdämpfers getragen wird, und wobei die Bremseinheit (70) durch das Teil getragen wird, welches die Bremsscheibe nicht trägt, **gekennzeichnet durch** Erzeugen einer Bremswirkung, um das Schwingen des Werkzeugs mit Hilfe der beiden Bremskomponenten (72), welche in der Bremseinheit (70) vorhanden sind, zu dämpfen, wobei die Bremskomponenten ein Loch (79) für eine Bremseinheit-Befestigungseinrichtung (71) aufweisen und veranlasst wird, in bremsendes Widerlager mit der Bremsscheibe (60) mittels Federeinrichtungen oder mittels eines Druckmediums gedrückt zu werden, welches ausgebildet ist, zwischen der Bremseinheit-Befestigungseinrichtung (71) und den Bremskomponenten (72) zu wirken, wenn die Befestigungseinrichtung (71) in einem bogenförmigen Schlitz (64) in der Bremsscheibe (60) während einer Pendelbewegung/Schwingbewegung gleitet.

7. Verfahren nach Anspruch 6, **dadurch gekennzeichnet, dass** veranlasst wird, dass eine periphere Fläche der Bremskomponenten (72) gleitend mit einer Ausnehmung (20) in dem Teil (11), welches die Bremsscheibe nicht trägt, zusammenwirkt.

8. Verfahren nach Anspruch 6 oder 7, **gekennzeichnet durch** Verwendung von mechanischen Federeinrichtungen (73).

9. Verfahren nach Anspruch 6 oder 7, **gekennzeichnet durch** Verwendung einer hydraulisch-angetriebenen Federeinrichtung.

10. Verwendung einer Anordnung nach einem der Ansprüche 1 - 5, **dadurch gekennzeichnet, dass** die Anordnung dazu verwendet wird, eine Pendelbewegung/Schwingungsbewegung eines angehängten Objekts (5) zu dämpfen.

## Revendications

1. Agencement d'amortisseur d'oscillations particulièrement un amortisseur d'oscillations (1) pour porter un outil (5) qui est suspendu à partir d'une flèche de grue (2) ou analogue, dans lequel l'amortisseur d'oscillations (1) comprend une partie supérieure (11) qui peut être reliée à la flèche de grue (2), et une partie inférieure (12) qui est capable de porter un outil de travail (5) ou un dispositif similaire quelconque soit directement soit par l'intermédiaire d'un rotateur (4) par exemple, dans lequel la partie supérieure (11) et la partie inférieure (12) sont reliées de façon pivotante l'une à l'autre au moyen d'un joint pivotant (13), dans lequel l'amortisseur d'oscillations (1) comprend un agencement de frein (50) qui comprend au moins un disque de frein (60) et au moins une unité de frein (70) qui agit conjointement avec ledit disque de frein, dans lequel le disque de frein (60) est porté soit par la partie supérieure (11) soit la partie inférieure (12) dudit amortisseur d'oscillations, dans lequel l'unité de frein (70) est portée par la partie qui ne porte pas le disque de frein, dans lequel le disque de frein (60) comprend une fente arquée (64) qui loge un dispositif de fixation (71) d'unité de frein, **caractérisé en ce que** l'unité de frein (70) comprend au moins deux composants de frein (72) ayant un trou (79) pour le dispositif de fixation (71) et dont chacun est placé sur un côté respectif du disque de frein (60) ; et **en ce que** les composants de frein (72) sont comprimés pour être en appui de freinage avec le disque de frein (60) au moyen de dispositifs à ressort (73) ou au moyen d'un moyen de pression, lesdits dispositifs à ressort ou moyen de pression étant adaptés pour agir entre le dispositif de fixation (71) et les composants de frein (72).

2. Agencement d'amortisseur d'oscillations selon la revendication 1, **caractérisé en ce que** le dispositif de fixation (71) comprend une vis (74) et un écrou (77).

3. Agencement d'amortisseur d'oscillations selon la revendication 1 ou 2, **caractérisé en ce que** le contour extérieur des composants de frein (72) est adapté pour une coaction de coulissement avec un évidement (20) dans la partie (11) qui ne comprend pas de disque de frein.

4. Agencement d'amortisseur d'oscillations selon l'une quelconque des revendications 1 à 3, **caractérisé en ce que** le dispositif à ressort (73) comprend des ressorts à rondelles.

5. Agencement d'amortisseur d'oscillations selon l'une quelconque des revendications 1 à 4, **caractérisé en ce que** la partie (11) qui ne porte pas de disque de frein a un évidement (19) qui loge une partie du disque de frein (60).

6. Procédé concernant un amortisseur d'oscillations, particulièrement un amortisseur d'oscillations (1) qui est prévu pour porter un outil (5) qui est suspendu à partir d'une flèche de grue (2) ou analogue, dans lequel l'amortisseur d'oscillations (1) comprend une partie supérieure (11) qui est reliée à la flèche de grue (2), et une partie inférieure (12) qui porte un outil de travail (5) ou analogue soit directement soit par l'intermédiaire d'un rotateur (4) par exemple, dans lequel la partie supérieure (11) et la partie inférieure (12) sont reliées l'une à l'autre de façon pivotante par l'intermédiaire d'un joint pivotant (13), dans lequel l'amortisseur d'oscillations (1) comprend un agencement de frein (50) qui comprend au moins un disque de frein (60) et au moins une unité de frein (70) qui agit conjointement avec ledit disque de frein, dans lequel le disque de frein (60) est porté soit par la partie supérieure (11) soit la partie inférieure (12) dudit amortisseur d'oscillations, et dans lequel l'unité de frein (70) est portée par la partie qui ne porte pas le disque de frein, **caractérisé par** le fait de générer une action de freinage afin d'amortir les oscillations dudit outil à l'aide de deux composants de frein (72) compris dans l'unité de frein (70), lesdits composants de frein ayant un trou (79) pour un dispositif de fixation (71) d'unité de frein et étant forcés à être comprimés pour être en appui de freinage avec le disque de frein (60) au moyen de dispositifs à ressort ou au moyen d'un moyen de pression adapté pour agir entre le dispositif de fixation (71) d'unité de frein et les composants de frein (72) lorsque ledit dispositif de fixation (71) coulisse dans une fente arquée (64) dans le disque de frein (60) durant un mouvement pendulaire/mouvement d'oscillation.

7. Procédé selon la revendication 6, **caractérisé par** le fait de forcer une surface périphérique des composants de frein (72) à agir de façon coulissante conjointement avec un évidement (20) dans la partie (11) qui ne porte pas le disque de frein.

8. Procédé selon la revendication 6 ou 7, **caractérisé par** l'utilisation de dispositifs à ressort mécaniques (73).

9. Procédé selon la revendication 6 ou 7, **caractérisé par** l'utilisation de moyens à ressort actionnés de façon hydraulique.

10. Utilisation d'un arrangement selon l'une quelconque des revendications 1 à 5, **caractérisée en ce que** l'agencement est utilisé pour amortir un mouvement pendulaire/ mouvement d'oscillation d'un objet suspendu (5).
